# EUROPÄISCHE PATENTSCHRIFT

(11) **EP 4 396 928 B1**
(45) Veröffentlichungstag und Bekanntmachung des Hinweises auf die Patenterteilung: **09.12.2026**
(21) Anmeldenummer: 22799914.1
(22) Anmeldetag: 04.10.2022
(51) Int. Cl.: H02K 7/00, H02K 7/116, F16D 1/104, F16H 57/00, F16D 1/08

(54) **ELEKTROMOTOR EINES NEBENAGGREGATS EINES KRAFTFAHRZEUGS**
ELECTRIC MOTOR OF AN AUXILIARY ASSEMBLY OF A MOTOR VEHICLE
MOTEUR ÉLECTRIQUE D'UN ENSEMBLE AUXILIAIRE D'UN VÉHICULE AUTOMOBILE

(30) Priorität: 08.10.2021 DE 102021211366
(43) Veröffentlichungstag der Anmeldung: 10.07.2024
(73) Patentinhaber: Brose Fahrzeugteile SE & Co. Kommanditgesellschaft, Würzburg, 97076 Würzburg (DE)
(72) Erfinder: LIESCHKE, Ralf, 58099 Hagen (DE); OBENDORFER, Moritz, 97072 Würzburg (DE)
(74) Vertreter: FDST Patentanwälte
(86) Internationale Anmeldenummer: PCT/EP2022/077519
(87) Internationale Veröffentlichungsnummer: WO 2023/057420

(56) Entgegenhaltungen:
- CN-U- 211 239 594
- DE-A1- 102019 218 246
- JP-A- 2008 167 585
- KR-B1- 102 047 092

## Beschreibung

Die Erfindung betrifft einen Elektromotor eines Nebenaggregats eines Kraftfahrzeugs. Ferner betrifft die Erfindung ein Nebenaggregat eines Kraftfahrzeugs.

Kraftfahrzeuge, wie Personenkraftwagen (Pkw), weisen eine Vielzahl an Nebenaggregaten auf, die nicht direkt dem Vortrieb des Kraftfahrzeugs dienen. Derartige Nebenaggregate sind beispielsweise für den Betrieb des Hauptantriebs erforderlich, oder dienen der Bereitstellung oder Erhöhung eines Komforts für den Nutzer des Kraftfahrzeugs. Ein derartiges Nebenaggregat ist beispielsweise ein elektromotorischer Verstellantrieb, wie ein elektromotorischer Fensterheber. Alternativ ist das Nebenaggregat beispielsweise ein elektromotorischer Kältemittelverdichter, der insbesondere ein Bestandteil eines Kältemittelkreislaufs des Kraftfahrzeugs ist.

In einer weiteren Alternative ist der Elektromotor ein Bestandteil des Bremssystems des Kraftfahrzeugs. Hierbei ist der Elektromotor beispielsweise ein Bestandteil eines Antiblockiersystems, einer Antischlupfregelung oder einer elektromotorisch betätigten Bremskraftverteilung. Es ist jedoch auch möglich, den Elektromotor in einem Bremskraftverstärker einzusetzen. Hierbei wird mittels des Elektromotors insbesondere eine aufgebrachte Pedalkraft verstärkt. Beispielsweise ist der Bremskraftverstärker zumindest teilweise hydraulisch ausgestaltet, und mittels des Elektromotors wird insbesondere eine Hydraulikpumpe betrieben und/oder etwaige Ventile betätigt.

Alternativ ist der Bremskraftverstärker elektromechanisch ausgestaltet. Der elektromechanischen Bremskraftverstärker umfasst dabei meist eine Eingangsstange, die mittels eines Fußpedals in einer Längsrichtung zur Betätigung der Bremse bewegt wird. Die Eingangsstange wirkt auf einen Arbeitskolben, mittels dessen ein Druck in einem Bremsflüssigkeitssystem erhöht wird. Der Elektromotor wirkt auf die Eingangsstange, sodass eine Betätigung des Fußpedals unterstützt wird. Somit ist eine von einem Nutzer zur Betätigung der Bremse aufzubringende Kraft reduziert. Zudem ist der Bremskraftverstärker aufgrund des Elektromotors unabhängig von einer tatsächlichen Betätigung des Fußpedals, und die Eingangsstange kann insbesondere mittels des Elektromotors in Abhängigkeit von bestimmten Fahrsituationen unabhängig von dem Fußpedal bewegt werden, was zu einer Abbremsung des Kraftfahrzeugs führt.

Zum Wirken des Elektromotors auf die Eingangsstange ist meist ein Getriebe vorgesehen, das mittels des Elektromotors angetrieben ist. Hierfür ist an einer Rotorwelle des Elektromotors üblicherweise ein Zahnrad befestigt. Meist ist dieses mittels einer Presspassung auf die hohlzylindrisch ausgestaltete Rotorwelle gepresst. Damit die bei Antrieb des Getriebes auftretenden Kräfte nicht zu einer Ablösung des Zahnrads von der Rotorwelle führen, ist ein vergleichsweise starker Kraftschluss zwischen dem Zahnrad und der Rotorwelle erforderlich. Um eine Beschädigung des Zahnrads hierbei zu vermieden, ist es erforderlich, dieses vergleichsweise robust auszugestalten, was zu einem vergleichsweise hohen Gewicht führt. Infolgedessen ist eine Trägheit erhöht und eine Dynamik des Elektromotors verringert.

In KR 102 047 092 B1 ist ein Untersetzungsgetriebe und ein Stellantrieb für eine elektrische Feststellbremse mit diesem Getriebe offenbart. Ein Satellitengetriebe umfasst ein erstes und ein zweites Ritzel mit unterschiedlichen Modulen und der gleichen Anzahl von Zähnen. Das erste und das zweite Ritzel sind einstückig ausgebildet, und ein Sonnenrad ist wahlweise mit dem ersten oder dem zweiten Ritzel verbunden.

Aus DE 10 2019 218 246 A1 ist eine elektrische Antriebseinheit beinhaltend ein Abtriebselement bekannt. Es ist ein aus Metall bestehendes, eine Verzahnung zur Übertragung eines Drehmoments aufweisendes Abtriebsritzel mit einem Flanschbereich vorhanden, der zumindest bereichsweise unmittelbar von einem Signalgeber-Element umspritzt ist, das ein kunststoffgebundenes Magnetmaterial aufweist.

CN 211 239 594 U zeigt einen Motor, wobei ein Wackeln eines auf einer rotierenden Welle angeordneten Getriebeteils verhindert ist.

JP 2008 167585 A offenbart einen Elektromotor mit einem Untersetzungsgetriebe, das ein axiales Spiel aufnimmt.

Der Erfindung liegt die Aufgabe zugrunde, einen besonders geeigneten Elektromotor eines Nebenaggregats eines Kraftfahrzeugs sowie ein besonders geeignetes Nebenaggregat eines Kraftfahrzeugs anzugeben, wobei vorteilhafterweise eine Robustheit erhöht und/oder Herstellungskosten reduziert sind, und wobei geeigneterweise eine Herstellung vereinfacht ist.

Hinsichtlich des Elektromotors wird diese Aufgabe durch die Merkmale des Anspruchs 1 und hinsichtlich des Nebenaggregats durch die Merkmale des Anspruchs 6 erfindungsgemäß gelöst. Vorteilhafte Weiterbildungen und Ausgestaltungen sind Gegenstand der jeweiligen Unteransprüche.

Die nachstehend beschriebenen Ausführungsformen und Ausführungsbeispiele betreffen den erfindungsgemäßen Elektromotor bzw. das erfindungsgemäße Nebenaggregat.

Der Elektromotor ist ein Bestandteil eines Nebenaggregats. Hierfür ist der Elektromotor geeignet, insbesondere vorgesehen und eingerichtet. Das Nebenaggregat ist ein Bestandteil eines Kraftfahrzeugs. Mit anderen Worten ist im bestimmungsgemäßen Zustand das Nebenaggregat an weiteren Bestandteilen des Kraftfahrzeugs montiert. Hierfür ist das Nebenaggregat geeignet, insbesondere vorgesehen und eingerichtet. Das Kraftfahrzeug ist insbesondere landgebunden und vorzugsweise mehrspurig ausgestaltet. Hierbei ist es geeigneterweise möglich, das Kraftfahrzeug im Wesentlichen frei zu positionieren, zum Beispiel auf einer entsprechenden Fahrbahn. Hierfür weist das Kraftfahrzeug insbesondere entsprechende Räder auf. Zusammenfassend ist es bevorzugt möglich, das Kraftfahrzeug im Wesentlichen unabhängig von sonstigen Gegebenheiten an Land zu positionieren. Mit anderen Worten ist das Kraftfahrzeug geeigneterweise nicht schienengeführt. Vorzugsweise ist das Kraftfahrzeug ein Personenkraftwagen (Pkw) oder ein Nutzkraftwagen, wie ein Lastkraftwagen (Lkw) oder Bus.

Das Nebenaggregat dient im bestimmungsgemäßen Gebrauch nicht direkt dem Vortrieb des Kraftfahrzeugs und stellt somit keinen Hauptantrieb des Kraftfahrzeugs dar. Beispielsweise dient dabei das Nebenaggregat dem Betrieb des Hauptantriebs oder der Bereitstellung von für den Betrieb des Kraftfahrzeugs erforderlichen Funktionen, die nicht direkt dem Vortrieb des Kraftfahrzeugs dienen. Alternativ hierzu erfolgt mittels des Nebenaggregats eine Erhöhung eines Komforts oder die Bereitstellung von Komfortfunktionen.

Das Nebenaggregat weist beispielsweise eine Nenn- oder Maximalleistung zwischen 100 W und 1000 W, vorzugsweise zwischen 300 W und 700 W und beispielsweise zwischen 400 W und 500 W auf. Das Nebenaggregat ist zum Beispiel ein elektromotorischer Verstellantrieb, wie ein elektromotorischer Fensterheber. Alternativ ist das Nebenaggregat beispielsweise ein elektromotorischer Kältemittelverdichter, der insbesondere ein Bestandteil eines Kältemittelkreislaufs des Kraftfahrzeugs ist. In einer weiteren Alternative ist das Nebenaggregat eine elektromotorische Pumpe, wie eine Wasserpumpe. Geeigneterweise ist die elektromotorische Pumpe eine Schmiermittelpumpe, wie eine Motorölpumpe oder eine Getriebeölpumpe. Hierbei ist mittels des Elektromotors jeweils ein Pumpenrad angetrieben, das auf die zu pumpende Flüssigkeit angepasst ist. In einer weiteren Alternative ist der Elektromotor ein Bestandteil eines Lüfters, wie eines Kühlerlüfters oder eines Gebläses, die somit das jeweilige Nebenaggregat darstellen. In einer Alternative ist das Nebenaggregat ein Lenkunterstützung, und mittels des Elektromotors ist insbesondere eine Lenkstange angetrieben oder es wird zumindest ein Lenkeinschlag von lenkbar ausgestalteten Rädern des Kraftfahrzeugs mittels des Elektromotors eingestellt oder deren Einstellung unterstützt.

In einer weiteren Alternative ist das Nebenaggregat ein Bremssystem oder ein Teil des Bremssystems des Kraftfahrzeugs. Hierbei ist der Elektromotor beispielsweise ein Bestandteil eines Antiblockiersystems, einer Antischlupfregelung oder einer elektromotorisch betätigten Bremskraftverteilung. Besonders bevorzugt ist das Nebenaggregat ein Bremskraftverstärker, wobei bei Betrieb mittels des Elektromotors insbesondere eine von einem Nutzer, der auch als Benutzer oder Fahrer bezeichnet wird, auf ein Bremspedal aufgebrachte Pedalkraft verstärkt wird.

Beispielsweise ist der Bremskraftverstärker zumindest teilweise hydraulisch ausgestaltet, und mittels des Elektromotors wird insbesondere eine Hydraulikpumpe betrieben und/oder etwaige Ventile betätigt. Besonders bevorzugt jedoch ist der Bremskraftverstärker elektromechanisch ausgestaltet, und das Nebenaggregat ist somit ein elektromechanischer Bremskraftverstärker. Infolgedessen ist eine Konstruktion des Nebenaggregats vereinfacht.

Der elektromechanischen Bremskraftverstärker umfasst zweckmäßigerweise eine Eingangsstange, die mittels eines Fußpedals in einer Längsrichtung zur Betätigung der Bremse bewegt wird. Beispielsweise ist hierbei das Fußpedal direkt an der Eingangsstange angelenkt oder beispielsweise über ein Gestänge. Zumindest jedoch ist das Fußpedal in Wirkverbindung mit der Eingangsstange. Die Eingangsstange wirkt auf einen Arbeitskolben. Beispielsweise ist der Arbeitskolben direkt an der Eingangsstange befestigt, insbesondere angeformt. Alternativ hierzu ist zwischen diesen eine weitere Mechanik angeordnet. Der Arbeitskolben ist insbesondere in einem Pumpraum angeordnet, in dem bei Betrieb eine Bremsflüssigkeit vorhanden ist. Bei linearem Bewegen des Arbeitskolben in dem Pumpraum wird, je nach Bewegungsrichtung, die Bremsflüssigkeit aus dem Pumpraum gedrückt oder hineingesogen. Vorzugsweise sind etwaige Bremskolben von Bremsen eines Bremssystems des Kraftfahrzeugs hydraulisch mit dem Pumpraum verbunden, sodass bei Drücken der Bremsflüssigkeit aus dem Pumpraum die Bremsen betätigt werden.

Die Eingangsstange ist zweckmäßigerweise umfangsseitig mit einem Gewinde versehen, auf das ein innenverzahntes Antriebszahnrad gesetzt ist. Mittels der Eingangsstange und des Antriebszahnrads ist hierbei eine Art Spindel gebildet.

Das Antriebszahnrad ist zweckmäßigerweise mittels des Elektromotors angetrieben, beispielsweise direkt oder bevorzugt über ein Getriebe. Bei Bestromung des Elektromotors wird somit über das Antriebszahnrad in die Eingangsstange Kraft eingeleitet und folglich auch auf den Arbeitskolben.

Vorzugsweise umfasst der elektromechanische Bremskraftverstärker einen Sensor mittels dessen bei Betrieb eine Betätigung des als Bremspedal wirkenden Fußpedals erfasst wird. In Abhängigkeit davon wird der Elektromotor bestromt. Geeigneterweise umfasst der elektromechanische Bremskraftverstärker ein Steuergerät, mittels dessen der Sensor ausgelesen die Bestromung des Elektromotors eingestellt wird. In einer Weiterbildung wird mittels des Steuergeräts der Elektromotor unabhängig von einer tatsächlichen Betätigung des Fußpedals bestromt, vorzugsweise in Abhängigkeit einer bereitgestellten Aufforderung, die insbesondere über ein etwaiges Bussystem übermittelt wird. Die Aufforderung wird dabei beispielsweise von einem Assistenzsystem des Kraftfahrzeugs oder eines Bordcomputers des Kraftfahrzeugs erstellt. Insbesondere wird hierbei die Aufforderung in Abhängigkeit von bestimmten Fahrsituationen erstellt, zum Beispiel von einem Notbremsassistenten. Alternativ oder in Kombination hierzu ist das Kraftfahrzeug teilweise oder vollständig autonom ausgestaltet, sodass eine Fortbewegung unabhängig von einer Steuerung eines Nutzers erfolgt. Die Aufforderung wird dabei insbesondere durch einen sogenannten Autopiloten erstellt.

Der Elektromotor weist eine Rotorwelle auf, die entlang einer Rotorachse angeordnet ist, die auch als Motorachse oder Rotationsachse bezeichnet wird. Die Rotorwelle ist zweckmäßigerweise einstückig und beispielsweise aus einem Stahl erstellt. Vorzugsweise ist an der Rotorwelle ein Rotor des Elektromotors befestigt, der beispielsweise zumindest einen Magneten aufweist. Der Magnet wechselwirkt bei Betrieb zweckmäßigerweise mit einem Magneten eines Stators, der vorzugsweise den Rotor umfangsseitig umgibt, und der insbesondere hohlzylindrisch ausgestaltet sowie konzentrisch zur Rotorachse angeordnet ist.

Beispielsweise ist der Elektromotor ein bürstenbehafteter Kommutatormotor, und der Stator umfasst einen Permanentmagneten. Besonders bevorzugt jedoch ist der Elektromotor ein bürstenloser Elektromotor, beispielsweise ein bürstenlosen Gleichstrommotor (BLDC). Der Rotor weist in diesem Fall bevorzugt einen oder mehrere Permanentmagneten auf, die an der Rotorwelle befestigt sind. Beispielsweise sind die Permanentmagneten an einem Blechpakets befestigt oder in dieses eingebettet, das an der Rotorwelle befestigt ist. Der den Rotor umgebende Stator umfasst vorzugsweise einen oder mehrere Elektromagneten, die zweckmäßigerweise auf mehrere Phasen aufgeteilt sind. Insbesondere ist jeder der Phasen die gleiche Anzahl an Elektromagneten zugeordnet, die insbesondere jeweils eine elektrische Spule aufweisen. Geeigneterweise umfasst der Elektromotor drei Phasen, die beispielsweise in einer Dreiecks- oder Sternschaltung miteinander verschaltet sind.

Besonders bevorzugt umfasst der Elektromotor ein oder zwei Lagerschilde, mittels derer jeweils ein Lager gehalten ist. Das Lager ist zweckmäßigerweise jeweils als Wälzlager, beispielsweise als Kugellager, ausgestaltet. Mittels des bzw. der Lager ist die Rotorwelle drehbar um die Rotorachse gelagert, sodass bei einer Bestromung des Elektromotors, insbesondere der Elektromagneten, die Rotorwelle um die Rotorachse dreht.

Bei dem erfindungsgemäßen Elektromotor umfasst die Rotorwelle (einen zylindrischen Hauptabschnitt, der konzentrisch zur Rotorachse angeordnet ist, und der senkrecht zur Rotorachse einen runden Querschnitt aufweist. Hierbei ist der Querschnitt zweckmäßigerweise kreisrund und konstant über die vollständige Ausdehnung des Hauptabschnitts entlang der Rotorachse. Somit ist eine Fertigung vereinfacht. Geeigneterweise ist der etwaige Rotor an dem Hauptabschnitt der Rotorwelle befestigt, und auch die etwaigen Lager oder zumindest das etwaige Lager ist an dem Hauptabschnitt befestigt. Somit ist eine Fertigung vereinfacht.

Ferner weist die Rotorwelle erfindungsgemäß einen Montageabschnitt auf, der sich an den Hauptabschnitt anschließt und somit zu dem Hauptabschnitt entlang der Rotorachse versetzt ist. Der Montageabschnitt erstreckt sich ebenfalls entlang der Rotorachse und grenzt zweckmäßigerweise direkt an den Hauptabschnitt. Insbesondere weist die Rotorwelle lediglich den Hauptabschnitt und den Montageabschnitt auf, die aneinander befestigt, insbesondere einstückig miteinander, sind. Somit ist eine Fertigung vereinfacht.

Erfindungsgemäß weist der Montageabschnitt senkrecht zur Rotorachse einen tonnenförmigen Querschnitt auf, der somit zwei zueinander parallele Hauptkanten und zwei ausgebauchte Kanten aufweist. Die ausgebauchten Kanten sind bogenförmig, wobei der Mittelpunkt des Bogens insbesondere auf der Rotorachse liegt. Folglich ist der Querschnitt nach Art eines Zweiflachs ausgestaltet.

Erfindungsgemäß ist auf den Montageabschnitt ein Zahnrad aufgesetzt, das den Montageabschnitt somit umfangsseitig umgibt. Das Zahnrad weist eine Anzahl an Zähnen auf, und ist konzentrisch zur Rotorachse angeordnet, sodass die Zähne den Umfang des Zahnrads bilden. Somit ist das Zahnrad außenverzahnt ausgestaltet. Zwischen jeweils benachbarten Zähnen ist in tangentialer Richtung bezüglich der Rotorachse jeweils ein Tal gebildet ist. Insbesondere bildet der Montageabschnitt ein Ende der Rotorwelle, sodass das Zahnrad insbesondere ein Stirnrad des Elektromotors bildet. Im Montagezustand ist das Zahnrad zweckmäßigerweise mit weiteren Bestandteilen des Nebenaggregats in Eingriff, die somit über das Zahnrad angetrieben werden.

Erfindungsgemäß weist das Zahnrad eine zentrale Montageöffnung auf, entlang der Rotorachse verläuft. Die Montageöffnung ist insbesondere konzentrisch zur Rotorachse angeordnet und weist senkrecht zur Rotorachse einen tonnenförmigen Querschnitt auf. Vorzugsweise korrespondiert der tonnenförmige Querschnitt der Montageöffnung zum tonnenförmigen Querschnitt des Montageabschnitts, und diese sind zweckmäßigerweise zueinander gleich. Zumindest jedoch weist auch die zentrale Montageöffnung zwei zueinander parallele Hauptkanten sowie zwei ausgebauchte, also bogenförmige Kanten auf, wobei der Mittelpunkt des Bogens insbesondere auf der Rotorachse liegt. Geeigneterweise liegt die Montageöffnung umfangsseitig an dem Montageabschnitt an, sodass mittels dessen eine Zentrierung des Zahnrads erfolgt. Folglich ist dieses ebenfalls konzentrisch zur Rotorachse angeordnet.

Besonders bevorzugt ist zwischen der Montageöffnung und dem Montageabschnitt ein Formschluss realisiert.

Aufgrund der zueinander korrespondierenden tonnenförmigen Querschnitte der Montageöffnung und des Montageabschnitts erfolgt bei Betrieb des Elektromotors eine Kraftübertragung auf das Zahnrad mittels eines Formschlusses, nämlich aufgrund der zueinander parallelen Hauptkanten. Infolgedessen werden die weiteren Bestandteile des Zahnrads bei der Kraftübertragung vergleichsweise gering belastet, sodass eine Robustheit erhöht ist. Auch ist es nicht erforderlich, dass Zahnrad vergleichsweise massiv auszugestalten, sodass ein Trägheitsmoment des Elektromotors reduziert und eine Dynamik somit erhöht ist.

Zur mechanischen Verbindung, mittels derer die Kraftübertragung zwischen dem Zahnrad und der Rotorwelle ermöglicht ist, ist lediglich ein Aufsetzen des Zahnrads auf den Montageabschnitte erforderlich, weswegen eine Herstellung vereinfacht ist. Da zudem lediglich zur Bereitstellung des tonnenförmigen Querschnitts des Montageabschnitts ein Abflachen, also ein Abtragen von Material, erforderlich ist, ist eine Herstellung vereinfacht und beschleunigt, sodass Herstellungskosten reduziert sind. Zudem ist es möglich, die Rotorwelle und das Zahnrad aus unterschiedlichen Materialien herzustellen, weswegen eine Flexibilität erhöht ist.

Dabei ist es möglich, die Materialien für den jeweiligen Einsatzzweck passend zu optimieren, um eine Robustheit weiter zu erhöhen. Insbesondere ist die Rotorwelle aus einem Stahl, vorzugsweise einem Edelstahl oder einem sonstigen hochfesten Stahl erstellt. Somit ist eine Robustheit erhöht. Folglich ist es möglich, den Durchmesser des Querschnitts der Rotorwelle im Bereich des Hauptabschnitts vergleichsweise gering zu wählen, sodass eine Trägheit der Rotorwelle und somit des Elektromotors weiter verringert ist.

Insbesondere ist das Zahnrad mittels Sinterns erstellt und beispielsweise aus einem Metall oder einer Keramik gefertigt. Aufgrund des Sinterns ist eine vergleichsweise freie Formenwahl für das Zahnrad ermöglicht, sodass dieses auf das Einsatzgebiet angepasst werden kann. Auch ist es möglich, das Zahnrad aus einem Material mit einer vergleichsweise geringen Reibung oder Selbstschmierung zu fertigen, sodass ein Wirkungsgrad des Elektromotors verbessert ist. Auch ist aufgrund des Sinterns ein vergleichsweise umfangreiches Nachbearbeiten nicht erforderlich, sodass eine Herstellungszeit weiter verkürzt ist.

Beispielsweise weist das Zahnrad eine Zykloidenverzahnung auf. Besonders bevorzugt jedoch weist das Zahnrad eine Evolventenverzahnung auf. Infolgedessen ist eine Herstellung vereinfacht. Zudem ist eine konstante Drehmomentübertragung ermöglicht, weswegen ein Betrieb vergleichmäßigt ist. Wenn das Nebenaggregat als Bremskraftverstärker ausgestaltet ist, erfolgt somit im Wesentlichen ein kontinuierliches Erhöhen einer Bremskraft oder Bremsdrucks und somit ein kontinuierliches Abbremsen des Kraftfahrzeugs. Zudem ist auch bei einer Erschütterung des elektromechanischen Bremskraftverstärker und der sich somit ergebende kurzzeitigen Veränderung der Position der Rotorachse bezüglich der Drehachse des anzutreibenden Bauteils auch weiterhin eine Kraftübertragung ermöglicht, weswegen eine Robustheit des Nebenaggregats erhöht ist.

Erfindungsgemäß weist jedoch der Montageabschnitt über seine vollständige Ausdehnung entlang der Rotorachse den tonnenförmigen Querschnitt auf, ebenso wie die Montageöffnung.

Auf diese Weise ist der mechanische Kontakt zwischen dem Zahnrad und der Rotorwelle, der für die Kraftübertragung genutzt wird, vergrößert, sodass eine Robustheit erhöht ist. Auch sind die Anforderungen an die Steifigkeit des Materials des Zahnrads und der Rotorwelle verringert, weswegen vergleichsweise kostengünstige Materialien verwendet werden können.

Beispielsweise ist das Zahnrad geradverzahnt, und die Zähne sind parallel zur Rotorachse angeordnet. Infolgedessen wirken bei Betrieb zwischen dem Zahnrad und der Rotorwelle lediglich Kräfte in der tangentialen Richtung, also auf die zueinander parallelen Hauptkanten der beiden tonnenförmigen Querschnitte. In einer sonstigen Richtung treten hingegen keine nennenswerten Kräfte auf. Aufgrund der vergleichsweisen geringen wirkenden Kräfte auf das Zahnrad parallel zur Rotorachse, also in Axialrichtung, ist eine vergleichsweise umfangreiche Fixierung des Zahnrads an der Rotorwelle nicht erforderlich. Beispielsweise ist hierfür das Zahnrad stoffschlüssig an der Rotorwelle befestigt, beispielsweise mittels Klebens oder Schweißens.

Besonders bevorzugt jedoch ist das Zahnrad bezüglich der Rotorachse schrägverzahnt, und die Zähne verlaufen somit bezüglich der Rotorachse schräg. Mit anderen Worten ist jeder Zahn entsprechend einer Wendelform angeordnet. Mit anderen Worten beschreibt jeder Zahn zumindest teilweise die Form einer Wendel oder Helix. Infolgedessen ist eine Laufruhe des Elektromotors sowie des etwaigen damit angetriebenen Bauteils erhöht sowie eine Geräuschentwicklung verringert. Jedoch wirken somit bei Betrieb auf das Zahnrad zusätzliche Kräfte in der Axialrichtung, also parallel zur Rotorachse. Geeigneterweise ist das Zahnrad an der Rotorwelle derart befestigt, dass auch diese Kräfte aufgenommen werden, sodass ein Ablösen des Zahnrads von Rotorwelle vermieden wird.

Zwischen den Hauptkanten des Montageabschnitts und der Montageöffnung, und der damit definierten Flächen, ist erfindungsgemäß eine Presspassung erstellt. Folglich erfolgt eine kraftschlüssige Anlage des Zahnrads an der Rotorwelle in diesem Bereich, weswegen eine Kraftübertragung von Rotorwelle auf das Zahnrad verbessert ist. Zudem erfolgt bei einer Drehrichtungsumkehr der Rotorwelle kein Versatz des Zahnrads aufgrund eines etwaigen Spiels, sodass eine Belastung verringert ist. Insbesondere erfolgt aufgrund der Presspassung eine Stabilisierung des Zahnrads in Axialrichtung, also parallel zur Rotorachse, sodass bei Betrieb wirkende Axialkräfte zwischen dem Zahnrad und der Rotorachse kompensiert werden und nicht zu einem Versatz des Zahnrads bezüglich der Rotorwelle führen.

Insbesondere weist dabei der tonnenförmige Querschnitt des Montageabschnitts ein Übermaß bezüglich der Montageöffnung des Zahnrads auf, sodass zur Montage das Zahnrad auf den Montageabschnitt gepresst wird. Infolgedessen wird insbesondere das Zahnrad im Bereich der ausgebauchten Kanten elastisch und/oder plastisch verformt, sodass die kraftschlüssige Anlage der Hauptkanten aneinander realisiert ist. Hierbei erfolgt eine Belastung des Zahnrads im Bereich der ausgebauchten Kanten auf Zug, weswegen eine Beschädigung des Zahnrads hierbei im Wesentlichen vermieden ist.

Zwischen den ausgebauchten Kanten des Montageabschnitts und den ausgebauchten Kanten der Montageöffnung ist erfindungsgemäß eine Spielpassung erstellt. Somit wird das Zahnrad bezüglich der Rotorwelle aufgrund der ausgebauchten Kanten ausgerichtet, was eine Montage erleichtert. Jedoch erfolgt in dem Bereich des Zahnrads, in dem lediglich eine vergleichsweise geringe Materialstärke vorhanden ist, also die Dicke der Wand zwischen der Montageöffnung und den zwischen den Zähnen gebildeten Tälern im Vergleich zu der Dicke der Wand im Bereich der Hauptkanten verringert ist, eine vergleichsweise geringe mechanische Belastung. Folglich ist eine Beschädigung des Zahnrads bei Montage oder auch bei Betrieb vermieden. Zudem ist es möglich, die Wandstärke des Zahnrads in diesem Bereich vergleichsweise dünn zu wählen, sodass ein Gewicht des Zahnrads und somit eine Trägheit des Elektromotors verringert ist.

Beispielsweise gehen bei dem tonnenförmigen Querschnitt des Montageabschnitts und/oder der Montageöffnung die Hauptkanten mittels einer Rundung oder eines Bogens in die jeweils benachbarten ausgebauchten Kanten über. Bevorzugt jedoch ist zwischen jeder Hauptkante und den jeweils benachbarten ausgebauchten Kanten der Querschnitte oder zumindest eines der Querschnitte, jeweils eine Ecke gebildet. Somit ist eine Kraftübertragung zwischen dem Zahnrad und der Rotorwelle weiter verbessert. Jedoch erfolgt im Bereich der Ecke eine vergleichsweise hohe Belastung des Zahnrads. Vorzugsweise ist daher in radialer Richtung benachbart zu jeder der Ecken des Querschnitts jeweils ein Zahn des Zahnrads angeordnet, sodass eine Verdickung der Wand des Zahnrads in diesem Bereich erfolgt. Mit anderen Worten ist aufgrund der Anordnung jeweils eines Zahns in radialer Richtung versetzt zu der jeweiligen Ecke, eine Wanddicken des Zahnrads erhöht. Somit ist eine Überlastung des Zahnrads im Bereich der Ecke vermieden und folglich eine Robustheit erhöht. Zusammenfassend ist in radialer Richtung, die bezüglich der Rotorachse bestimmt ist, zu jeder Ecke radial nach außen angeordnet ein Zahn versetzt, und die zwischen den Zähnen angeordneten Täler sind zu jeder der Ecken zweckmäßigerweise in radialer Richtung und zusätzlich in tangentialer Richtung versetzt.

Insbesondere ist hierbei das Zahnrad geradverzahnt. Falls das Zahnrads schrägverzahnt ist, ist geeigneterweise über den vollständigen Verlauf in Rotorachse in radialer Richtung bezüglich jeder Ecke jeweils ein Teil des Zahns angeordnet, und insbesondere ist keines der Täler bezüglich jeder Ecke lediglich radial versetzt. Falls die Steigung der Zähne, also deren Winkel bezüglich der Rotorachse vergleichsweise groß gewählt ist, ist die Anordnung der Zähne ist vorzugsweise derart, dass lediglich bei einem vergleichsweise geringen Bereich des Zahnrads, vorzugsweise bei dem minimal möglichen Bereich, zu den Ecke in radialer Richtung eines der Täler angeordnet ist, sodass eine Belastung zumindest verringert ist. Zumindest sind die Zähne derart angeordnet, dass bezüglich eines vergleichsweise großen Bereichs entlang der Rotorachse sich an die Ecken jeweils einer der Zähne in radialer Richtung anschließt, sodass das Zahnrad lediglich in einem vergleichsweise geringen Bereich eine minimale Wanddicke aufweist, die insbesondere zwischen der jeweiligen Ecke und einem der Täler zwischen den Zähnen bestimmt ist. Insbesondere sind die Zähne symmetrisch bezüglich der jeweiligen Ecken angeordnet, insbesondere punktsymmetrisch bezüglich des Mittelpunkts des jeweiligen Zahns entlang der Rotorachse. Somit ist eine Überlastung ebenfalls vermieden.

Beispielsweise ist die Rotorwelle mehrstückig ausgestaltet. Besonders bevorzugt jedoch ist diese einstückig, sodass eine Herstellung vereinfacht ist. Insbesondere ist die Fläche des Querschnitts des Montageabschnitts kleiner als die Fläche des Querschnitts des Hauptabschnitt. Folglich ist es möglich, die Rotorwelle zunächst zylindrisch auszugestalten und aus dieser mittels Materialabtragung den Montageabschnitts herauszuarbeiten. Der Abschnitt hingegen ist mit dem unbearbeiteten zylindrischen Bereich gebildet. Folglich ist lediglich ein vergleichsweise geringes Abtragen von Material erforderlich, weswegen das Herstellen der Rotorwelle vereinfacht ist. Auch ist auf diese Weise kein vergleichsweises kostenintensives Werkzeug erforderlich, was eine Herstellung vereinfacht.

Beispielsweise fluchten die ausgebauchten Kanten des Montageabschnitts mit der Kante des runden Querschnitts des Hauptabschnitts. Infolgedessen ist dort ein Ausbilden von Verwirbelungen oder ein Ablagern von Fremdpartikeln vermieden. Besonders bevorzugt jedoch ist zwischen dem Montageabschnitt und dem Hauptabschnitt eine umfangsseitig umlaufende Stufe gebildet, und die ausgebauchten Kanten sind somit bezüglich der Begrenzung des runden Querschnitts in Richtung der Rotorachse versetzt. Infolgedessen ist mittels der Stufe eine Anlage für das Zahnrads in Axialrichtung, die parallel zur Rotorachse ist, gebildet, sodass eine Montage des Zahnrads vereinfacht ist. Insbesondere liegt das Zahnrad im Montagezustand an der Stufe an. Folglich wird das Zahnrad zumindest teilweise mittels der Stufe und des Hauptabschnitts stabilisiert, sodass eine Beschädigung des Zahnrads vermieden ist. Zudem ist aufgrund der verringerten Masse im Bereich des Montageabschnitts ein Gewicht und folglich eine Trägheit weiter verringert. Besonders bevorzugt ist der Abstand der zwischen benachbarten Zähnen gebildeten Täler des Zahnrads zur Rotorachse kleiner oder gleich dem Radius des runden Querschnitts. Infolgedessen weist das Zahnrad einen vergleichsweise kleinen Durchmesser auf, weswegen eine Trägheit weiter verringert ist.

Beispielsweise ist das dem Hauptabschnitt abgewandte Ende des Montageabschnitts stumpf, was eine Fertigung der Rotorwelle vereinfacht. Besonders bevorzugt jedoch ist das dem Hauptabschnitt abgewandte Ende des Montageabschnitts angefast, sodass dort der Querschnitt weiter verkleinert ist. Die auf diese Weise erstellte Fase dient dem Aufsetzen des Zahnrads auf die Rotorwelle, was die Herstellung des Elektromotors vereinfacht. Insbesondere sofern zumindest teilweise eine Presspassung zwischen der Montageöffnung und dem Montageabschnitt erstellt wird, wird mittels der Fase das Zahnrad sukzessive elastisch und/oder plastisch verformt, wobei dies im Wesentlichen kontinuierlich erfolgt, sodass eine Überlastung des Zahnrads; beispielsweise ein Brechen, vermieden ist.

Das Nebenaggregat ist ein Bestandteil eines Kraftfahrzeugs, das beispielsweise ein Nutzkraftwagen ist, wie ein Bus oder ein Lastkraftwagen (Lkw). Besonders bevorzugt ist das Nebenaggregat im Montagezustand ein Bestandteil eines Personenkraftwagens (Pkw). Das Nebenaggregat dient hierbei nicht direkt dem Vortrieb des Kraftfahrzeugs, sondern beispielsweise dem Betrieb eines Hauptantriebs, der Bereitstellung von Komfortfunktionen und/oder der Einstellung einer Bewegungsrichtung des Kraftfahrzeugs. Besonders bevorzugt ist das Nebenaggregat ein Bremskraftverstärker, der besonders bevorzugt elektromechanisch ausgestaltet ist. Hierbei wird bei Betrieb des Elektromotors mittels des Bremskraftverstärkers insbesondere ein Druck in einem Bremsflüssigkeitssystem erhöht. Das Bremsflüssigkeitssystem umfasst dabei insbesondere einen Pumpraum des elektromechanischen Bremskraftverstärkers, geeigneterweise einen Ausgleichsraum und vorzugsweise mehrere Bremskolben, wobei insbesondere jedem Rad des Kraftfahrzeugs zumindest ein Bremskolben zugeordnet ist. Geeigneterweise sind jedem Rad mehrere Bremskolben zugeordnet, die insbesondere an einer Bremszange oder einem Bremssattel angeordnet sind.

Zumindest weist das Nebenaggregat einen Elektromotor nach Anspruch 1 und ein damit angetriebenes Bauteil auf, wobei das angetriebene Bauteil insbesondere ein Antriebszahnrad oder ein sonstiges weiteres Zahnrad umfasst, das geeigneterweise im Eingriff mit einem Zahnrad des Elektromotors ist.

Ferner betrifft die Erfindung ein Kraftfahrzeug mit einem derartigen Nebenaggregat.

Die im Zusammenhang mit dem Elektromotor erläuterten Weiterbildungen und Vorteile sind sinngemäß auch auf das Nebenaggregat / das Kraftfahrzeug sowie untereinander zu übertragen und umgekehrt.

Nachfolgend wird ein Ausführungsbeispiel der Erfindung anhand einer Zeichnung näher erläutert. Darin zeigen:
- Fig. 1: schematisch ein Kraftfahrzeug mit einem elektromechanischen Bremskraftverstärker,
- Fig. 2: schematisch in einer Schnittdarstellung den elektromechanischen Bremskraftverstärker, der einen Elektromotor aufweist,
- Fig. 3: perspektivisch ausschnittsweise den eine Rotorwelle aufweisenden Elektromotor,
- Fig. 4: perspektivisch ausschnittsweise die Rotorwelle mit einem aufgesetzten Zahnrad,
- Fig. 5: die Rotorwelle gemäß Fig. 4 ohne Zahnrad, und
- Fig. 6: perspektivisch das Zahnrad.

Einander entsprechende Teile sind in allen Figuren mit den gleichen Bezugszeichen versehen.

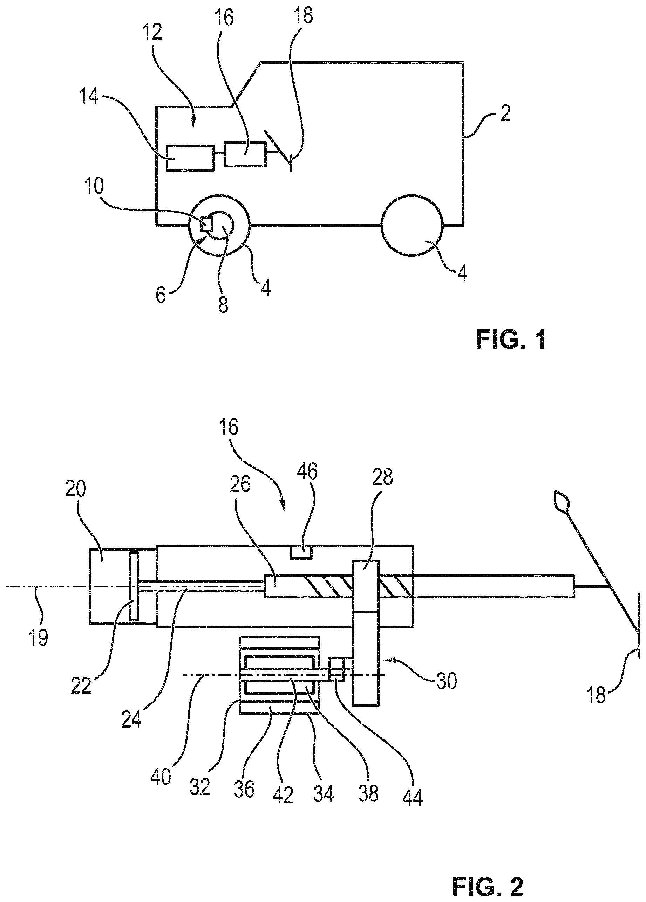

In Figur 1 ist schematisch vereinfacht ein Kraftfahrzeug 2 in Form eines Personenkraftwagens (Pkw) dargestellt. Das Kraftfahrzeug 2 weist mehrere Räder 4 auf, mittels derer ein Kontakt zu einer nicht näher dargestellten Fahrbahn erfolgt. Einige der Räder 4 sind mittels eines nicht gezeigten Hauptantriebs angetrieben. Zum Abbremsen weist das Kraftfahrzeug 2 mehrere Bremsen 6 auf, von denen lediglich eine einzige dargestellt ist. Jede der Bremsen 6 umfasst eine Bremsscheibe 8, die drehfest mit dem jeweils zugeordneten Rad 4 verbunden ist. Karosserieseitig fest ist ein Bremssattel 10 der Bremse 6 gehalten, der mehrere Bremskolben aufweist, die nicht näher dargestellt sind.

Die Bremskolben sind ein Bestandteil eines Bremsflüssigkeitssystems 12, das einen Ausgleichsbehälter 14 aufweist der fluidtechnisch mit den Bremskolben gekoppelt ist. Ferner ist mit dem Ausgleichsbehälter 14 ein Nebenaggregat 16 in Form eines elektromechanischen Bremskraftverstärker gekoppelt. Diese ist mittels eines Fußpedals 18, nämlich eines Bremspedals, betätigt. Das Bremsflüssigkeitssystem 12 ist mit einer Bremsflüssigkeit befüllt, und bei Betätigen des Fußpedals 18 erfolgt mittels des elektrischen Nebenaggregats 16, also des elektromechanischen Bremskraftverstärkers, eine Erhöhung eines Drucks in dem Bremsflüssigkeitssystem 12, sodass über den Ausgleichsbehälter 14 die Bremskolben betätigt werden. Infolgedessen werden an dem Bremssattel 10 befestigte Bremsbeläge gegen die zugeordnete Bremsscheibe 8 gepresst, sodass das Kraftfahrzeug 2 abgebremst wird.

In Figur 2 ist in einer Schnittdarstellung entlang einer Längsachse 19 das Nebenaggregat 16, also der elektromechanische Bremskraftverstärker, dargestellt. Dieses weist einen Pumpraum 20 auf, innerhalb dessen ein Arbeitskolben 22 angeordnet und mittels der Seitenwand des Pumpraums 20 entlang der Längsachse 19 geführt ist. Der Arbeitskolben 22 reicht bis zu den Innenwänden des Pumpraums 20, sodass dieser mittels des Arbeitskolben 22 in zwei Teile unterteilt ist. Einer der Teile ist über einen nicht näher dargestellten Ausgang mit dem Ausgleichsbehälter 14 fluidtechnisch verbunden und vollständig mit der Bremsflüssigkeit befüllt. Bei Bewegen des Arbeitskolben 22 in dem Pumpraum 20 wird somit die Menge der darin angeordneten Bremsflüssigkeit verändert.

Der Arbeitskolben 22 ist über eine Verbindungsstange 24, die parallel zur Längsachse 19 angeordnet ist, an einer Eingangsstange 26 befestigt, die sich ebenfalls entlang der Längsachse 19 erstreckt, und die mittels einer nicht näher dargestellten Lagerung entlang der Längsachse 19 verschiebbar gelagert ist. Hierbei ist jedoch die Eingangsstange 26 drehfest gelagert, sodass eine Rotation der Eingangsstange 26 vermieden ist. An dem der Verbindungsstange 24 gegenüberliegenden Ende ist die Eingangsstange 26 an dem Fußpedal 18 mittels einer Mechanik abgestützt.

Bei Betätigung des Fußpedals 18 wird die Eingangsstange 26 und folglich auch die Verbindungsstange 24 entlang der Längsachse 19 bewegt, sodass auch der Arbeitskolben 22 bewegt wird. Infolgedessen wird die Bremsflüssigkeit aus dem Pumpraum 20 herausgedrückt. Ferner weist das Nebenaggregat 16 eine nicht näher dargestellte Feder auf, mittels derer die Eingangsstange 26 und daher auch die Verbindungsstange 24 und folglich auch der Arbeitskolben 22 beaufschlagt sind. Aufgrund der Federkraft wird der Arbeitskolben 22 so weit wie möglich aus dem Pumpraum 22 heraus bewegt, sodass ein von dem Pumpraum 20 aufgenommenes Volumen an Bremsflüssigkeit maximal ist.

Die Eingangsstange 26 ist außenverzahnt, und auf diese ist ein Antriebszahnrad 28 aufgesetzt, das wiederum innenverzahnt ist. Die Eingangsstange 26 sowie des Antriebszahnrad 28 sind somit nach Art einer Spindel ausgestaltet. Zusätzlich ist das Antriebszahnrad 28 außenverzahnt sowie in Eingriff mit einem Getriebe 30. Das Getriebe 30 ist mittels eines Elektromotors 32 angetrieben, der ein Motorgehäuse 34 umfasst, innerhalb dessen ein hohlzylindrischer Stator 36 angeordnet ist. Innerhalb des Stators 36 ist ein ebenfalls hohlzylindrischer Rotor 38 konzentrisch zu einer Rotorachse 40 angeordnet und an einer konzentrisch zur Rotorachse 40 verlaufenden Rotorwelle 42 drehfest befestigt. Folglich ist die Rotorwelle 42 entlang der Rotorachse 40 angeordnet. Die Rotorwelle 42 ist mittels nicht näher dargestellter Lager drehbar um die Rotorachse 40 gelagert.

Der Rotor 38 umfasst ein nicht näher dargestelltes Blechpaket, an dem ebenfalls nicht näher dargestellte Permanentmagneten gehalten sind, die mit Elektromagneten des Stators 36, die jeweils mittels einer elektrischen Spule gebildet sind, bei Betrieb wechselwirken, sodass der Rotor 38 und daher auch die Rotorwelle 42 um die Rotorachse 40 rotiert werden. Folglich ist der Elektromotor 32 als bürstenloser Gleichstrommotor (BLDC) ausgestaltet. An der Rotorwelle 42 ist endseitig ein Zahnrad 44 drehfest befestigt, das mit dem Getriebe 30 in Eingriff ist. Somit erfolgt eine Kraftübertragung von der Rotorwelle 42 auf das Getriebe 30 über das Zahnrad 44, das mit einem entsprechenden Zahnrad des Getriebes 30 kämmt.

Das Nebenaggregat 16 umfasst ferner einen Sensor 46, mittels dessen eine Betätigung des Fußpedals 18 erfasst wird, nämlich ein Versetzen der Eingangsstange 26 entlang der Längsachse 19. Sobald dies erfasst wurde, wird der Elektromotor 32 bestromt, sodass über das Getriebe 30 das Antriebszahnrad 28 gedreht wird. Aufgrund der Verzahnung mit der Eingangsstange 26 erfolgt auf diese Weise ein Aufbringen einer zusätzlichen Kraft auf die Eingangsstange 26 entlang der Längsachse 19, sodass die Betätigung des Fußpedals 18 unterstützt wird. Aufgrund der Kraftausübung mittels des Antriebszahnrad 28 sowie der Betätigung des Fußpedals 18 wird der Arbeitskolben 22 in dem Pumpraum 20 bewegt und somit ein Fahrer des Kraftfahrzeugs 2 beim Bremsen unterstützt. Zusammenfassend ist die von dem Fahrer zum Bremsen aufzubringende Kraft reduziert, was einen Komfort erhöht. Auch ist es möglich, das Nebenaggregat 16, also den elektromotorischen Bremskraftverstärker, völlig unabhängig von der Betätigung des Fußpedals 18 zu betätigen. Folglich erfolgt ein Bremsen des Kraftfahrzeugs 2 unabhängig von der Betätigung des Fußpedals 18, beispielsweise im Rahmen einer Notbremsung oder bei einem automatischen/autonomen Betrieb des Kraftfahrzeugs 2. Aufgrund der Funktionsweise des Nebenaggregats 16 ist eine vergleichsweise hohe Dynamik des Elektromotors 32 und daher eine geringe Trägheit sowohl des Rotors 38 als auch der Rotorwelle 42 und des Zahnrads 44 erforderlich.

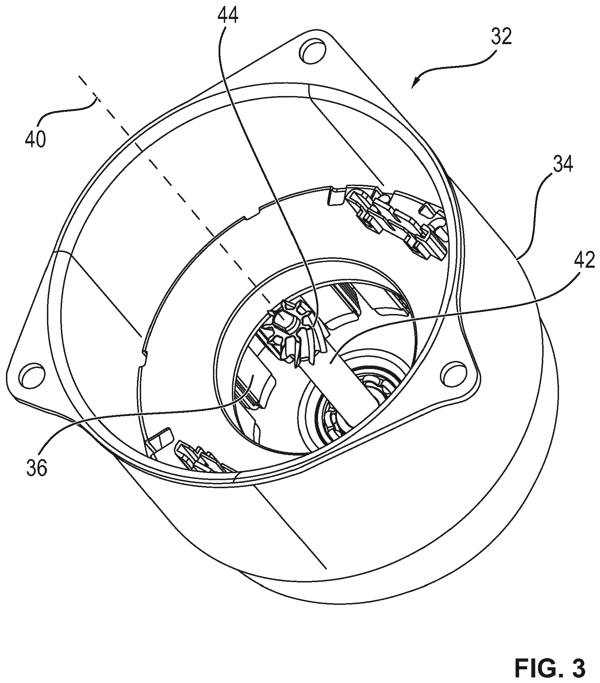

In Figur 3 ist perspektivisch ausschnittsweise der Elektromotor 32 dargestellt, der das topfförmige Motorgehäuse 34 aufweist, innerhalb dessen der Stator 36 angeordnet ist. Der Rotor 32 ist nicht gezeigt, jedoch die sich entlang der Rotorachse 40 erstreckende Rotorwelle 42, auf die endseitig das Zahnrad 44 aufgesetzt ist.

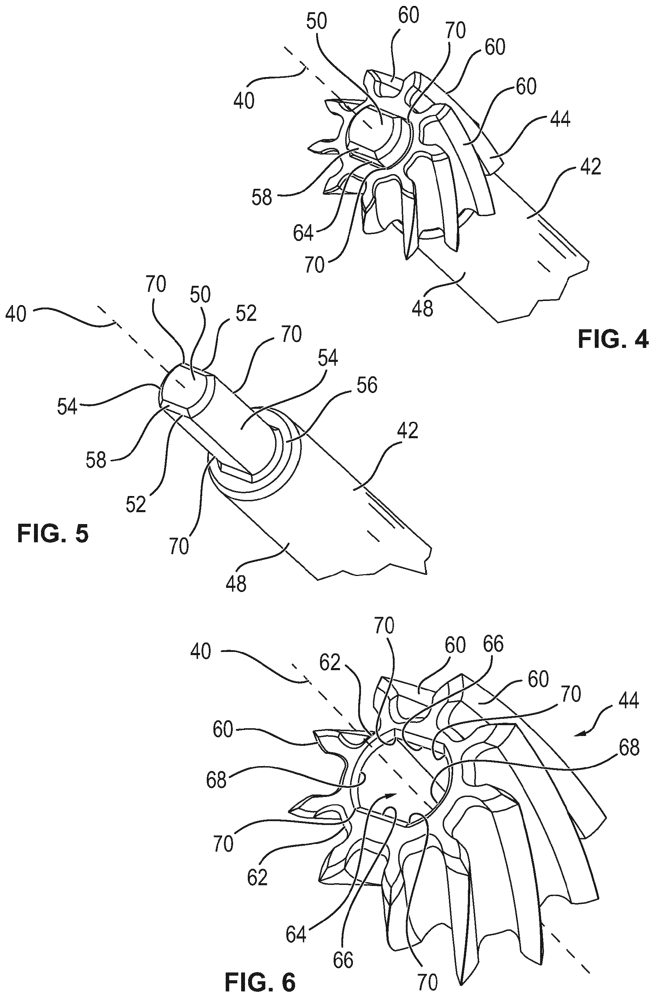

Ausschnittsweise perspektivisch ist die sich entlang der Rotorachse 40 erstreckende Rotorwelle 42 in Figur 4 mit dem aufgesetzten Zahnrad 44 und in Figur 5 mit abgenommenem Zahnrad 44 gezeigt, das perspektivisch in Figur 6 dargestellt ist. Die Rotorwelle 42 ist einstückig aus einem Edelstahl erstellt und weist einen zylindrischen Hauptabschnitt 48 auf, der senkrecht zur Rotorachse 40 einen runden Querschnitt aufweist. An dem zylindrischen Hauptabschnitt 48 ist der Rotor 38 drehfest befestigt, und auch die nicht näher dargestellten Lagern sind an dem Hauptabschnitt 48 angebunden.

An den Hauptabschnitt 48 schließt sich ein Montageabschnitt 50 der Rotorwelle 42 an, der eines der Enden der Rotorwelle 42 entlang der Rotorachse 40 darstellt, die parallel zu einer axialen Richtung angeordnet ist. Der Montageabschnitt 50 weist senkrecht zur Rotorachse 40 einen tonnenförmigen Querschnitt mit zwei zueinander parallelen Hauptkanten 52 auf, die den gleichen Abstand zur Rotorachse 40 aufweisen. Ferner umfasst der tonnenförmige Querschnitt des Montageabschnitts 50 zwei ausgebauchte Kanten 54, die somit gerundet oder bogenförmig sind, wobei der Mittelpunkt des Bogens auf der Rotorachse 40 liegt. Folglich ist der tonnenförmige Querschnitt nach Art eines Zweiflach ausgestaltet.

Der Radius des Bogens der ausgebauchten Kanten 54 ist geringer als der Radius des runden Querschnitts des Hauptabschnitts 48, sodass zwischen dem Montageabschnitt 50 und dem Hauptabschnitt 48 einen umfangsseitig umlaufende Stufe 56 gebildet ist. Zur Herstellung der Rotorwelle 42 wird ein zylindrischer Stab herangezogen, dessen Länge gleich der Länge der Rotorwelle 42 ist. Der Hauptabschnitt 48 ist direkt mittels des entsprechenden Teils des zylindrischen Stabs gebildet, und von diesen wird zur Herstellung des Montageabschnitts 50 Material abgetragen, insbesondere gefräst. Folglich ist eine benötigte Zeit zum Herstellen der Rotorwelle 42 vergleichsweise kurz. Ferner wird das dem Hauptabschnitt 48 abgewandten Ende des Montageabschnitts 50 angefast und weist somit eine Fase 58 auf. Mit Ausnahme der Fase 58 ist der Querschnitt des Montageabschnitt 50 entlang der vollständigen Ausdehnung entlang der Rotorachse 40 konstant.

Das Zahnrad 44 ist mittels Sinterns erstellt und weist mehrere Zähne 60 auf, zwischen denen in tangentialer Richtung bezüglich der Rotorachse 40 jeweils ein Tal 62 angeordnet ist. Die Zähne 60 weisen eine Evolventenverzahnung auf und sind schrägverzahnt. Mit anderen Worten verlaufen die Zähne 60 nicht parallel zur Rotorachse, und mittels jedes Zahns 60 ist teilweise eine Helix- oder Wendelform beschrieben.

Das Zahnrad 44 weist eine zentrale Montageöffnung 64 auf, die sich entlang der Rotorachse 40 erstreckt, und die senkrecht zur Rotorachse 40 einen tonnenförmigen Querschnitt aufweist. Somit weist die Montageöffnung 64 ebenfalls zwei zueinander parallelen Hauptkanten 66 sowie zwei ausgebauchte Kanten 68 auf. Im Montagezustand ist innerhalb der Montageöffnung 64 der Montageabschnitt 50 angeordnet, sodass das Zahnrad 44 auf den Montageabschnitt 50 aufgesetzt ist. Mit anderen Worten ist der Montageabschnitt 50 umfangsseitig mittels der Montageöffnung 64 und folglich mittels des Zahnrads 44, umgeben. Hierbei liegt das dem Hauptabschnitt 48 zugewandte Ende des Zahnrads 44 an der Stufe 56 an, sodass das Zahnrad 44 teilweise damit stabilisiert wird. Auch wird mittels der Stufe 56 die Position des Zahnrads 44 entlang der Rotorachse 40 auf der Rotorwelle 42 bestimmt.

Zwischen den Hauptkanten 52 des Montageabschnitts 50 und den Hauptkanten 66 der Montageöffnung 64, also deren jeweiligem Querschnitt, ist eine Presspassung erstellt, sodass die ebenen Flächen des Montageöffnung 64 sowie des Montageabschnitts 50 kraftschlüssig aneinander anliegen. Zwischen den ausgebauchten Kanten 54 des Montageabschnitts 50 und den ausgebauchten Kanten 68 der Montageöffnung 64 ist eine Spielpassung erstellt, sodass diese lediglich lose aneinander anliegen. Infolgedessen ist das Zahnrad 44 im Bereich der ausgebauchten Kanten 68 lediglich auf Zug belastet, sodass eine Überbelastung des Zahnrads 44 im Bereich der ausgebauchten Kanten 68, in dem eine Wanddicke des Zahnrads 44 reduziert ist, vermieden ist.

Mittels der ausgebauchten Kanten 54, 68 erfolgt eine Zentrierung des Zahnrads 44 auf der Rotorwelle 42, sodass dieses geeignet ausgerichtet ist. Aufgrund der Fase 58 ist ein Aufsetzen des Zahnrads 44 auf den Montageabschnitt 50 erleichtert, sodass auch ein vergleichsweise großer Kraftschluss der Presspassung zwischen den Hauptkanten 52, 66 bei einer vergleichsweise einfachen Montage ermöglicht ist.

Bei Betrieb erfolgt über die mittels der Hauptkanten 52, 66 definierten Flächen eine Kraftübertragung zwischen dem Zahnrad 44 und der Rotorwelle 42, wohingegen die ausgebauchten Kanten 54, 68 nicht belastet werden. Zudem ist aufgrund der Presspassung zwischen den Hauptkanten 52, 66 eine Reibung erhöht. Daher ist trotz der Schrägverzahnung des Zahnrads 44 und der deswegen bedingten bei Betrieb wirkenden Kraft parallel zur Rotorachse 40 ein Ablösen des Zahnrads 44 von der Rotorwelle 42 unterbunden.

Zwischen den Hauptkanten 66 und den jeweils benachbarten ausgebauchten Kanten 68 des Querschnitts der Montageöffnung 64 und somit aufgrund der Presspassung bzw. der Spielpassung zwischen dem Zahnrad 44 und dem Montageabschnitt 50 auch zwischen jeder Hauptkante 52 und den ausgebauchten Kanten 54 des Querschnitts des Montageabschnitts 50 ist jeweils eine Ecke 70 gebildet. Dabei liegt jeweils eine der Ecken 70 das Montageabschnitts 50 an einer der Ecken 70 der Montageöffnung 64 an. Bezüglich der Ecken 70 ist in einer radialen Richtung, die anhand der Rotorachse 40 bestimmt ist, jeweils einer der Zähne 60 des Zahnrads 44 angeordnet, sodass aufgrund des jeweiligen Zahns 60 im Bereich jeder der Ecken 70 eine Wandstärke des Kindes Zahnrads 44 erhöht ist. Zusammenfassend ist in radialer Richtung benachbart zu jeder der Ecken 70 jeweils einer der Zähne 60 des Zahnrads 44 angeordnet.

Aufgrund der Schrägverzahnung ist dabei ein kontinuierliches Überdecken der Ecken 70 mittels jeweils eines der Zähne 60 nicht möglich. Jedoch ist der Bereich entlang der Rotorachse 40, in dem sich in der radialen Richtung an die jeweilige Ecken 70 eines der Täler 62 anschließt, auf das Minimum reduziert. Infolgedessen ist beim Querschnitt des Verbunds auf dem Montageabschnitt 50 und dem Zahnrad 44 senkrecht zur Rotorachse 40 größtenteils zu der Ecken 70 jeweils einer der Zähne 60 des Zahnrads 44 benachbart in der Radialrichtung angeordneten. Infolgedessen ist es ermöglicht, einen Abstand der Täler 62 zur Rotorachse 40 und somit auch ein Gewicht des Zahnrads 44 weiter zu verringern, wobei eine Robustheit des Zahnrads 44 nicht beeinträchtigt wird, auch nicht im Bereich der Ecken 70.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung, der ausschließlich durch die beigefügten Ansprüche definiert ist, zu verlassen.

### Bezugszeichenliste

- 2: Kraftfahrzeug
- 4: Rad
- 6: Bremse
- 8: Bremsscheibe
- 10: Bremssattel
- 12: Bremsflüssigkeitssystem
- 14: Ausgleichsbehälter
- 16: Nebenaggregat
- 18: Fußpedal
- 19: Längsachse
- 20: Pumpraum
- 22: Arbeitskolben
- 24: Verbindungsstange
- 26: Eingangsstange
- 28: Antriebszahnrad
- 30: Getriebe
- 32: Elektromotor
- 34: Motorgehäuse
- 36: Stator
- 38: Rotor
- 40: Rotorachse
- 42: Rotorwelle
- 44: Zahnrad
- 46: Sensor
- 48: Hauptabschnitt
- 50: Montageabschnitt
- 52: Hauptkante
- 54: ausgebauchte Kante
- 56: Stufe
- 58: Fase
- 60: Zahn
- 62: Tal
- 64: Montageöffnung
- 66: Hauptkante
- 68: ausgebauchte Kante

## Patentansprüche

1. Elektromotor (32) eines Nebenaggregats (16) eines Kraftfahrzeugs, mit einer entlang einer Rotorachse (40) angeordneten Rotorwelle (42), die einen zylindrischen Hauptabschnitt (48), der senkrecht zur Rotorachse (40) einen runden Querschnitt aufweist, und einen sich daran anschließenden Montageabschnitt (50) umfasst, auf den ein Zahnrad (44) aufgesetzt ist,
**dadurch gekennzeichnet,**
**dass** der Montageabschnitt (50) senkrecht zur Rotorachse (40) einen tonnenförmigen Querschnitt mit zwei zueinander parallelen Hauptkanten (52) und zwei ausgebauchten Kanten (54) aufweist, dass das Zahnrad (44) eine zentrale Montageöffnung (64) mit einem tonnenförmigen Querschnitt senkrecht zur Rotorachse (40) aufweist, dass zwischen den Hauptkanten (52, 66) des Montageabschnitts (50) und der Montageöffnung (64) eine Presspassung erstellt ist, und dass zwischen den ausgebauchten Kanten (54, 68) des Montageabschnitts (50) und der Montageöffnung (64) eine Spielpassung erstellt ist.

2. Elektromotor (32) nach Anspruch 1,
**dadurch gekennzeichnet,**
**dass** das Zahnrad (44) bezüglich der Rotorachse (40) schrägverzahnt ist.

3. Elektromotor (32) nach einem der Ansprüche 1 bis 2,
**dadurch gekennzeichnet,**
**dass** zwischen jeder Hauptkante (66) und den jeweils benachbarten ausgebauchten Kanten (68) jeweils eine Ecke (70) gebildet ist, wobei in radialer Richtung benachbart zu jeder der Ecken (70) jeweils ein Zahn (60) des Zahnrads (44) angeordnet ist.

4. Elektromotor (32) nach einem der Ansprüche 1 bis 2,
**dadurch gekennzeichnet,**
**dass** zwischen dem Montageabschnitt (50) und dem Hauptabschnitt (48) eine umfangsseitig umlaufende Stufe (56) gebildet ist.

5. Elektromotor (32) nach einem der Ansprüche 1 bis 3,
**dadurch gekennzeichnet,**
**dass** das dem Hauptabschnitt (48) abgewandte Ende des Montageabschnitts (50) angefast ist.

6. Nebenaggregat (16) eines Kraftfahrzeugs (2), insbesondere elektromechanischer Bremskraftverstärker, mit einem Elektromotor (32) nach einem der Ansprüche 1 bis 5.

## Claims

1. Electric motor (32) of an auxiliary unit (16) of a motor vehicle, having a rotor shaft (42) which is arranged along a rotor axis (40) and comprises a cylindrical main portion (48), which has a round cross section perpendicularly to the rotor axis (40), and comprises an adjoining mounting portion (50), onto which a gearwheel (44) is placed,
**characterized**
**in that** the mounting portion (50) has, perpendicularly to the rotor axis (40), a barrel-shaped cross section with two mutually parallel main edges (52) and two bulged edges (54), in that the gearwheel (44) has a central mounting opening (64) with a barrel-shaped cross section perpendicularly to the rotor axis (40), in that a press fit is produced between the main edges (52, 66) of the mounting portion (50) and the mounting opening (64), and in that a clearance fit is produced between the bulged edges (54, 68) of the mounting portion (50) and the mounting opening (64).

2. Electric motor (32) according to Claim 1,
**characterized**
**in that** the gearwheel (44) is helically toothed with respect to the rotor axis (40).

3. Electric motor (32) according to either of Claims 1 and 2,
**characterized**
**in that**, between each main edge (66) and the in each case adjacent bulged edges (68), there is formed in each case one corner (70), wherein, adjacent to each of the corners (70) in a radial direction, there is arranged in each case one tooth (60) of the gearwheel (44).

4. Electric motor (32) according to either of Claims 1 and 2,
**characterized**
**in that** a circumferentially encircling step (56) is formed between the mounting portion (50) and the main portion (48).

5. Electric motor (32) according to one of Claims 1 to 3,
**characterized**
**in that** that end of the mounting portion (50) which is relatively remote from the main portion (48) is bevelled.

6. Auxiliary unit (16) of a motor vehicle (2), in particular an electromechanical brake-force booster, having an electric motor (32) according to one of Claims 1 to 5.

## Revendications

1. Moteur électrique (32) d'une unité auxiliaire (16) d'un véhicule à moteur, avec un arbre de rotor (42) disposé le long d'un axe de rotor (40), qui comprend une section principale (48) cylindrique comportant une section transversale ronde perpendiculairement à l'axe de rotor (40) et une section de montage (50) s'y raccordant, sur laquelle est placée une roue dentée (44) ;
**caractérisé en ce**
**que** la section de montage (50) comporte perpendiculairement à l'axe de rotor (40) une section transversale en forme de tonneau avec deux bords principaux (52) parallèles l'un à l'autre et deux bords (54) bombés de manière convexe, que la roue dentée (44) comporte une ouverture de montage (64) centrale avec une section transversale en forme de tonneau perpendiculairement à l'axe de rotor (40), qu'un ajustement serré est réalisé entre les bords principaux (52, 66) de la section de montage (50) et l'ouverture de montage (64), et qu'un ajustement avec jeu est réalisé entre les bords bombés de manière convexe (54, 68) de la section de montage (50) et l'ouverture de montage (64).

2. Moteur électrique (32) selon la revendication 1,
**caractérisé en ce**
**que** la roue dentée (44) est à denture hélicoïdale par rapport à l'axe de rotor (40).

3. Moteur électrique (32) selon l'une des revendications 1 à 2,
**caractérisé en ce**
**qu'**un coin (70) est formé respectivement entre chaque bord principal (66) et les bords bombés de manière convexe (68) respectivement adjacents, une dent (60) de la roue dentée (44) étant disposée dans la direction radiale de manière adjacente à chacun des coins (70).

4. Moteur électrique (32) selon l'une des revendications 1 à 2,
**caractérisé en ce**
**qu'**un épaulement périphérique (56) côté périphérie est formé entre la section de montage (50) et la section principale (48).

5. Moteur électrique (32) selon l'une des revendications 1 à 3,
**caractérisé en ce**
**que** l'extrémité de la section de montage (50) opposée à la section principale (48) est chanfreinée.

6. Unité auxiliaire (16) d'un véhicule à moteur (2), en particulier d'un servofrein électromécanique, avec un moteur électrique (32) selon l'une des revendications 1 à 5.
